Europäisches Patentamt

European Patent Office

Office européen des brevets

(11) Publication number : **0 481 932 A1**

## (12) EUROPEAN PATENT APPLICATION

(21) Application number : **91830432.0**

(22) Date of filing : **14.10.91**

(51) Int. Cl.⁵ : **A01K 61/00, A01K 63/04**

(30) Priority : **17.10.90 IT 522190**
**10.10.91 IT 10991**

(43) Date of publication of application :
**22.04.92 Bulletin 92/17**

(84) Designated Contracting States :
**AT BE CH DE DK ES FR GB GR IT LI LU NL SE**

(71) Applicant : **PROMOZIONE COMMERCIO S.r.L.**
**V.1o Borgosantantonio**
**I-83059 Vallata, Avellino (IT)**

(72) Inventor : **Piccinini, Giuseppe Raoul**
**Strada Nuova per Isorella**
**I-25023 Gottolengo (Brescia) (IT)**

(74) Representative : **Manzoni, Alessandro**
**MANZONI & MANZONI - UFFICIO**
**INTERNAZIONALE BREVETTI P.le Arnaldo n.**
**2**
**I-25121 Brescia (IT)**

(54) **Method and apparatus for fish breeding.**

(57) The invention relates to a method and plant for pisciculture with the use of at least one verticle container (10) having a funnel-shaped bottom (11) and water supply and drainage tubes. The water is drained from the bottom (11) of the container (10) for the continuous removal of defecations and impurities and is circulated in filtering and purifying equipment (17,19,25,26,33,34) and then recycled into the same container (10) in a closed hydraulic circuit (12).

Fig.1

The present invention relates to the fishing sector and in particular regards a method and plant for the breeding of fish or aquatic animals in both salt and fresh water.

Among the various proposals and realizations of pisciculture excluding those using horizontal basins or tanks, are also those which tend to make use of verticle space for a breeding or fattening of fish in usually cylindrical silos. A particular technique is in adopting cylindrical tanks with a conic base slanted downwards in the centre and being relatively shallow: approximately 15-20 cm at the edge and approximately 60 cm in the centre.

Fresh water is fed at the top, above the water line for the changing of water in the tank of such a plant. A drain is situated in the centre at the bottom of the tank.

The water can be supplied in various ways, depending on the available pressure, but it is however done so as to provoke and maintain the water in a uniform vortical movement and to enable defecations and various residue to deposit on the bottom. On the other hand the drainage of water from the bottom allows for an evacuation of the deepest layers of the water in the tank which contain less air and are less pure from the defecation of fish and from feed residue.

Another known technique still uses silos which are open at the top and have a funnel-shaped bottom but forsees: that fresh water is supplied from the bottom so as to maintain a good circulation of all the water in the container; that the water level in the container is controlled through a spillway; and that a periodical evacuation of the deposits on the bottom is carried out through a suitable sluice gate valve.

Both the above mentioned realizations are for "open" hydraulic plants which require a high quantity of fresh water and a evacuation of the used water with considerable problems regarding the continuous need and availabilty of water, to its pureness, temperature, alkalinity, etc. on one hand and regarding the purification and discharging of used water and of the material it transports on the other hand. These problems are strictly tied to environment, pollution, oxygenation, ect. factors.

Thus, there is no plant which continuously re-uses the same water so as to minimize these problems. Furthermore, the first type of plant mentioned does not tackle the problem of a proper aeration of the water because it considers that it is sufficiently oxygenated through the vortical movement caused by the supplying of water from the surface. The second type of plant has a forced oxygenation of the water in the tank coming from pure industrial oxygen therefore leading to supply problems, cost problems and last but not least causing problems to the respiratory apparatus of the fish which are bred.

The present invention aims to solve these problems and eliminate the inconveniences mentioned above by removing the natural factors subject to pollution, especially water, and climatic factors from the breeding system on one hand and by drastically reducing the availability and consumption of water with a possibility of an improved defecation of the waste material on the other hand.

It is infact the object of the present invention to propose a method and plant for fish breeding in "closed" systems which are able to satisfy and control the needs tied to all influenceable factors, to improve the breeding environment, to increase productivity and to reach a higher growth index in relation to the feed consumed.

Illnesses are eliminated as well through the treatment of the water in ozonizer cupboards which also increase and maintain the quantity of oxygen available in the body of water constant. This eliminates the impoverishment of oxygen during the evening and night when there is an interruption of the chlorophyll in photosynthesis, improves the organic metabolism and reduces the ammonia present in the breeding environment.

Another object of the invention is to propose the use of independent breeding silos with a new system for the circulation of the water which is able to satisfy the environmental needs tied to the change of water therefore guaranteeing optimization of use with new solutions for the filtration of the used water so as to be able to continuously re-cycle it in the same silos.

Yet another object of the invention is to fit similar fish breeding plants with means for a constant aeration of the water through the introduction of air into the silos even simultaneously to the re-cycled water and/or with the use of ozone and/or with the fixing of nozzles connected to compressors which force the air inside suction conduits. A lid may be used in order to solve the impoverishment of oxygen during the barometric pressure decreases. Said lid covers the entire surface of the container and the amount of oxygen in the body of water can be adjusted through the inlet of compressed air controlled from a valve.

The supply of air for aeration or oxygenation or pressurization can also be made use of, where necessary, for air-conditioning the body of water in the silos through a pre-heating or pre-cooling of the air according to the location, season, climatic factors, etc. Furthermore, the method and plant here proposed are for breeding in both fresh water and, by using suitable materials, in salt water.

Due to the continuous re-cycle of the same water in the same plant it is possible to install the breeders in any location even where there is very little water. Breeders using salt water can also be located far away from the sea which are traditional sources of water for this type of pisciculture. These breeders will only need a small quantity of water with the same characteristics as seawater without considerable increases in costs.

The present invention therefore refers to a method of pisciculture in accordance to claim 1 and to a plant in accordance to claim 8.

Further details of the invention will appear clearer from the following description with references being made to the attached drawings in which:

Fig. 1 shows a general cross-section plan of the plant with container and lid;

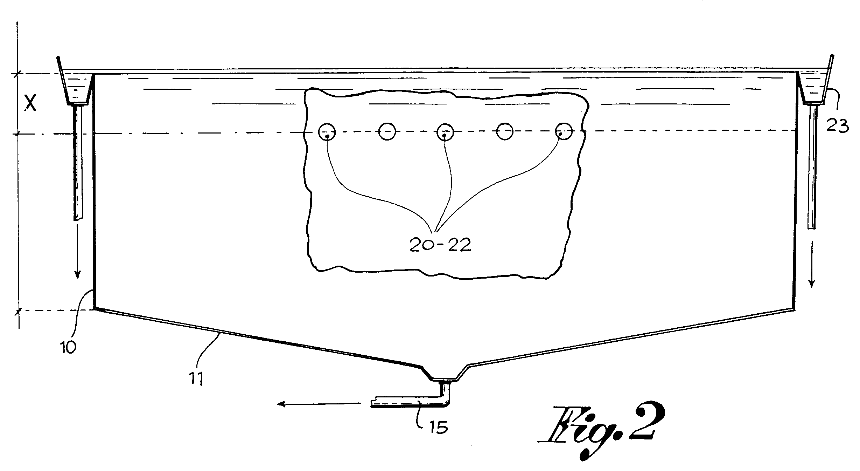

Fig. 2 shows a detail of the container pointing out the position of the nozzles for water/air supply;

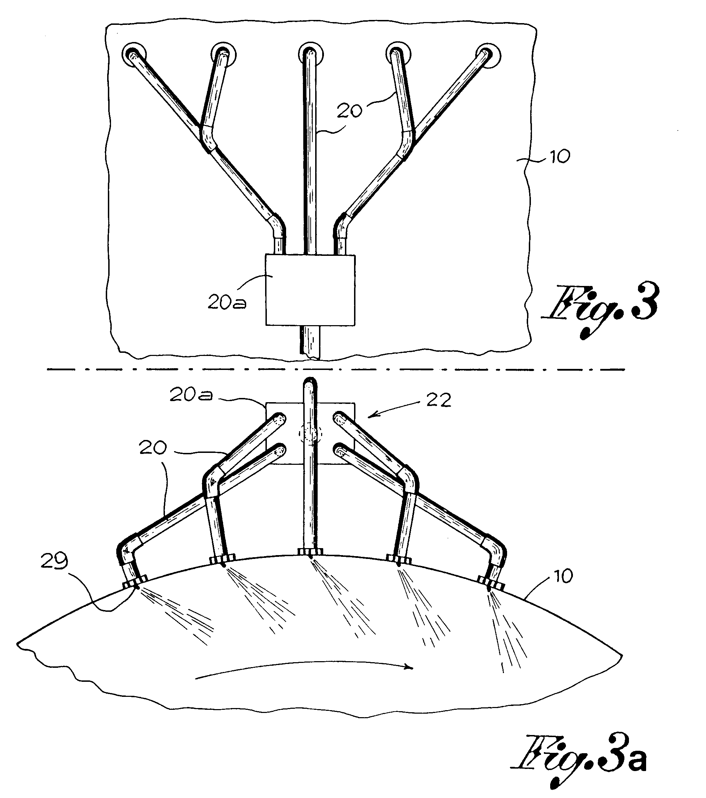

Figs. 3 and 3a show front and top views of the layout of the canalization for the feeding of the nozzles;

Fig. 4 shows a plan of the container with lid;

Figs. 5 and 5a show longitudinal cross-section and top views of the removable parts of the filtering column inside the container;

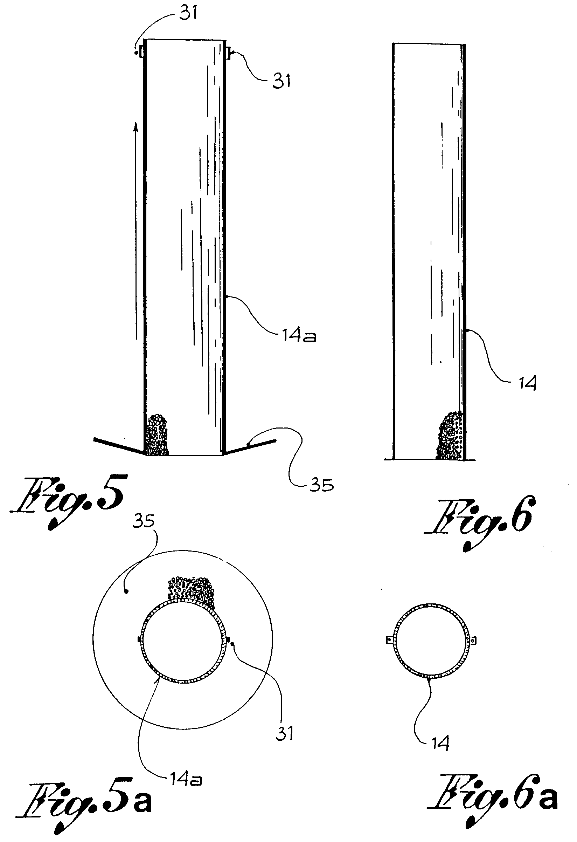

Figs. 6 and 6a show similar views of the fixed part of the filtering column inside the container; and

Figs. 7 and 7a show verticle and transverse cross-section views of a container suitable for the breeding of crustaceans or molluscs.

According to the invention, pisciculture is carried out in at least, but not necessarily, a cylindrical container (10) having a funnel-shaped bottom (11) and being fitted with a closed hydraulic circuit (12) set up for the drainage of the water from the bottom of the container, a filtering of the drained water for its purification and a re-cycle of the water filtered in the same container.

The container is advantageously made from a body being either completely or partly formed in stainless steel, in vitrified reinforced cement inside or by using reinforced resin or other materials available on the market which enable the container to withstand both fresh water and salt water for the breeding of seafish. Said container can be of the most varied diametre and depth depending on the volume of water and of the type and quantity of fish it is to hold. The container can be placed on supports or the bottom of the container itself can have an integral part which rests on the floor.

A drain (13) with a filtering column above made from two pierced concentric cylinders (14, 14a) having holes which are calibrated according to the size of the fish it is to hold is forseen in the center of the container (10) on the funnel-shaped bottom (11). More precisely, the inside cylinder (14), being made from stainless steel and/or pvc and/or special resin, is fixed to the bottom of the conic trunk of the tank and is higher than the tank itself. The external cylinder (14a), made from the same material as the inside one, is tight fitted on the cylinder (14) and has a circular flange (35) on its bottom with the same degree of slant as the bottom of the tank. Said flange is for confining any impurities of a large size or dead fish which the water draws towards the drain (13) at the bottom of the tank.

The external cylinder (14a) has tow or more handles (31) at the top which are to be hooked to a machine for its extraction.

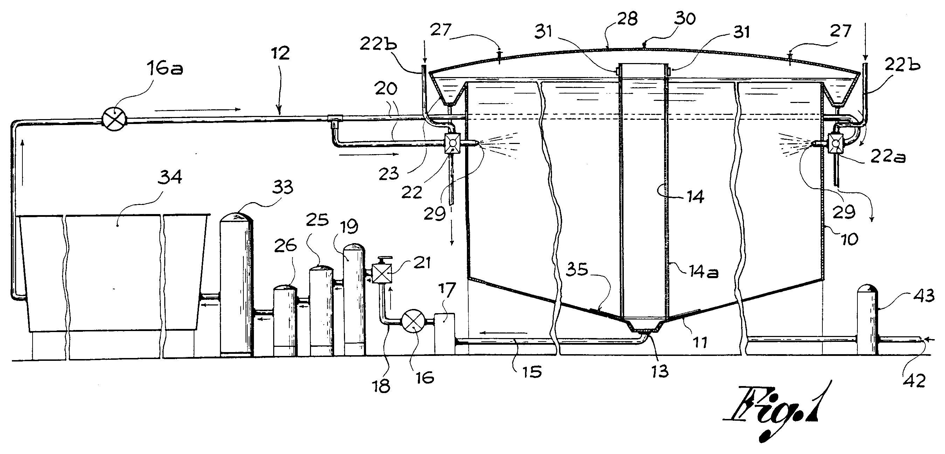

The water which is taken from any supply source is put into the tank (10) through a pipe (42) after having passed in a deferrizator (43) (Fig. 1). A pipe (15) is connected to the drain (13) at the bottom of the container. Said tube connects to the inlet of a circulation pump (16) with the interpositioning of a precleaner (17). This precleaner holds back the larger impurities carried by the water drained from the container through the drainage pipe (15). Said precleaner (17) is of variable sizes so as to attenuate resuction by the pump (16) of the defecations of the fish; the defecations which may enter a precleaner (17) of a modest size are carried at a notable speed, by the primary current, to occlude the holes in the precleaner (17) towards the conduit which leads to the pump (16).

The chosen sizes will be able to precipitate the defecation which is heavier than water through gravity. There are therefore no problems of occlusion and the pump (16) can work in the best possible mechanical conditions.

The precleaner (17) can also have pierced bulkheads on its inside to improve the deposit of defecations and to therefore allow the mechanical filtering to operate for longer working hours. The bulkheads can be positioned as desired in the ways which are considered most technical. The pump is of a convenient size and can be for fresh water or realized in materials such as bronze which withstands salt water when necessary.

The outlet of the pump (16) connects to a filter (19) for filtering and purifying the water through a tube (18). A manual or motor-operated valve (21) is inserted along the tube (18). Said valve is designed to control the hydraulic circuit and operate the drainage/supply of water, cleaning of the filter, etc.

The water which comes out of the filter (19) passes into a biological filter (25) and subsequently into a plant for ozone treatment (26), into an aeration tower (33) and into a possible container (34) for decantation. The water is then taken out of the container (34) by a pump (16a) and is divided into a number of tubes (20) which take it to water/air mixing apparatus (22) from where it is sprayed into the container (10) through nozzles (29).

The nozzles (29) are positioned under the surface of the water at an 'X' level being approximately at a quarter of depth of the water from the upper edge of the container (10).

The nozzles (29) are connected to the tubes (20) through a box (22a) in which the water is piped and, eliminating any preferential currents, sent into tubes of the same length and diameter to then flow into the nozzles (29). These movements give the water a sense of preset rotation which helps the disposal of any floating impurities by creating a light centrifuge force which pushes the impurities inside a tail race (23) around the top of the container. Said condition also improves the level of the water inside the container.

The filter (19) can be of quartz sand, of actived carbon or of other types suitable for the purification of water and has an internal cleaning device which is controlled by the valve (21), the sediments coming out of the filter being scavenged and collected together with the water from the tail race (23) into suitable tanks for further treatment and so that the separated water can be re-used.

Furthermore, the treatment of water in the ozone plant (26) exterminates virus, bacteria, iron, manganese, atrazine, etc., rendering the water pure and uniformely enrichening it with available oxygen oversaturating the water itself.

In practice, the water which drains from the bottom of the container (10) through the drainage pipe (15) passes into the precleaner (17), into the pump (16), through the valve (21), into the filter (19) for the purification, then into the biological filter (25), into the ozonizer (26), followed by the aeration tower (33), into the decantation container (34) and with the help of the pump (16a) and through the conduits (20) is sprayed by the nozzles (29) into the container (10) after having passed through the air/water mixers (22). The complete procedure is done in a closed cycle which does not result in a substantial consumption of water apart from limited leakages and natural evaporation.

The sequence of the components, particularly the positioning of the pumps (16, 16a), the filter (19), the washing valve (21), the biological filter (25), the ozonizer (26) and the aeration tower (33) can obviously be different but still be in accordance with the invention. In each case the water is sent back into the container, through the nozzles (29), straight into the body of water already present and in a tangential direction so as to provoke a continuous movement of the water and at the same time to improve the carrying of defecations and various impurities towards the drain.

Atmospheric air is sent into the body of water present in the container for a convenient oxygenation with the re-cycled water. To this end, each tube (20) for the return of the recycled water to the container, or more precisely the box (22a), can be connected to a tube (22b) for the intake of atmospheric air when the water passes. The air sent into the container can also be thermically treated, heated or cooled in advance so that the temperature of the water in the container can be adjusted independently from environmental or climatic factors. The intake tubes can also be connected to an air compressor so as to increase the amount of oxygen mixed with the water which is sent into the container (10) therefore reducing leakages from the nozzles (29) and becoming more efficient when placed under water.

The use of silos in the way described above and with a closed hydraulic circuit permits a maximum, a continuous utilization of the same water with a minimum consumption of fresh water.

This leads to considerable economical and ecological advantages as well as reducing risks which are otherwise connected to a continuous supply of new water and drainage of used water which at present provokes notable difficulties to the breeders who have been forced to reduce drainage water and consequently production because of the abnormal growth of seaweeds and vegetation downstream from the breeding plants. The verticle silos or containers need limited installation space and can be easily covered with any system; they are therefore not subject to pH alterations tied to acid rain or industrial drainage or two urbanized areas near breeding plants. Thus, the breeding conditions form a qualitative and hygenic point of view are certainly more favourable.

Furthermore, due to the possibilities of artificially influencing the oxygen present in the water, also in function of both the metabolic cycle of the qualities of fish and the density of the catch, the quantity of fish bred in a much shorter time can be increased with fewer risks tied to production factors and less consumption of feed. The plant also offers the possibility of giving necessary medicine to the fish bred either manually, through metering pumps or any other desired method which is preferably applied to the filters, or by putting aluminium sulphate into flocculation of the inert residue following its treatment with ozone.

The medicine can also be put into intake conduits of the ejectors. This method must be done using a reduced amount of medicine in respect to any other method seeing that it constantly remains in cycle.

The significant advantages are the following:
– the medicine is not necessarily concentrated as in open or partly-closed breeding tanks so as to obtain the desired results;
– a reduction in cost tied to the supplying of medicine;
– a constant low concentration of medicine which guarantees that the bred fish are totally exposed to the medicinal effects.

The drainage of the water from the bottom of the tank permits all the defecation and impurities to be constantly and regularly taken out of the breeding environment and filtered, purified and aerated water is supplied so as to reduce oxidization processes resulting from the ammonia present in the defecations and to the metabolism therefore creating an envioronment with as much oxygen as possible. The air-conditioning of the container by means of oxygenization air removes the possibility that the metabolic effect lowers during the cold season; at the same time the re-cycle of the water permits only a small quantity of energy used to disperse, unlike in breeding plants which constantly have a large supply of water from the outside and therefore loose energy. The method proposed is also advantageous in breeding plants which use water coming from the cooling of iron works, allowing for a constant re-use of the water, a reduction of hot water leakages, a more constant temperature and a solution to the problems which arise during cold seasons when the temperature of the water is not completely suitable for breeding.

The shortage of water in certain areas, either because of draught or the lack of meteorological precipitations or because the water is poluted, results in that most pisciculture plants are found near streams or water beds for and easier and larger supply of the water. The here proposed system can however be used anywhere because of the minimum consumption of water, the particular water treatment methods and because of the possibility of modifying the pressure inside the container (10) seeing that there is a notable reduction of oxygen in the water during the night (photosynthesis), by using pre-heated water (the higher the temperature of the water, the less oxygen it contains), or by installing plants at various heights (0.5 ppm. ca. is lost for every 700 m. of s.l.m altitude) or there is a notable decrease of oxygen in the water in function of the meteorological atmospheric pressure.

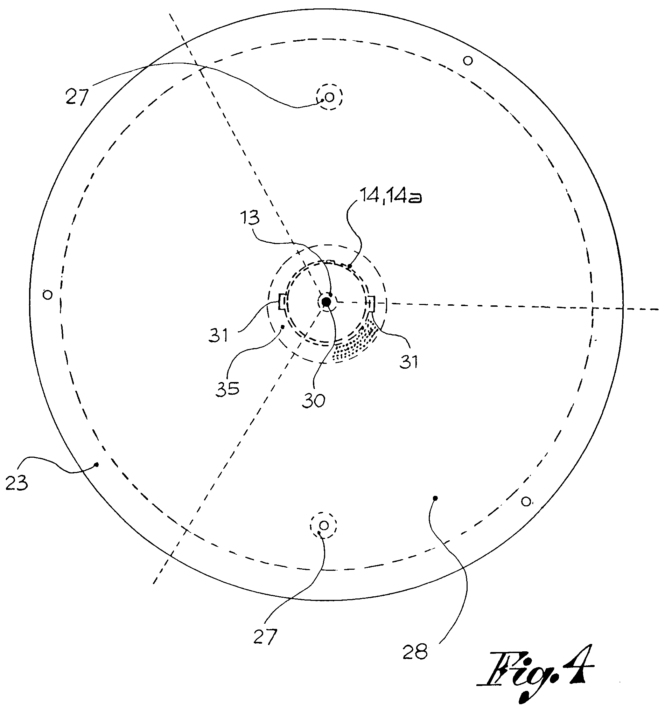

The container (10) can be fitted with a lid (28) for the controlling of the internal pressure. Said lid (28) is movable by a lifting hook (30) and is fitted with two or more valves (27) for the control of pressurization and also usable as pipe connections for the supplying of compressed air for the pressurization (Figs. 1 and 4).

Furthermore, said system guarantees the use of the hydric resources in a much more orderly way without wastages and with a maximum efficiency of the plant.

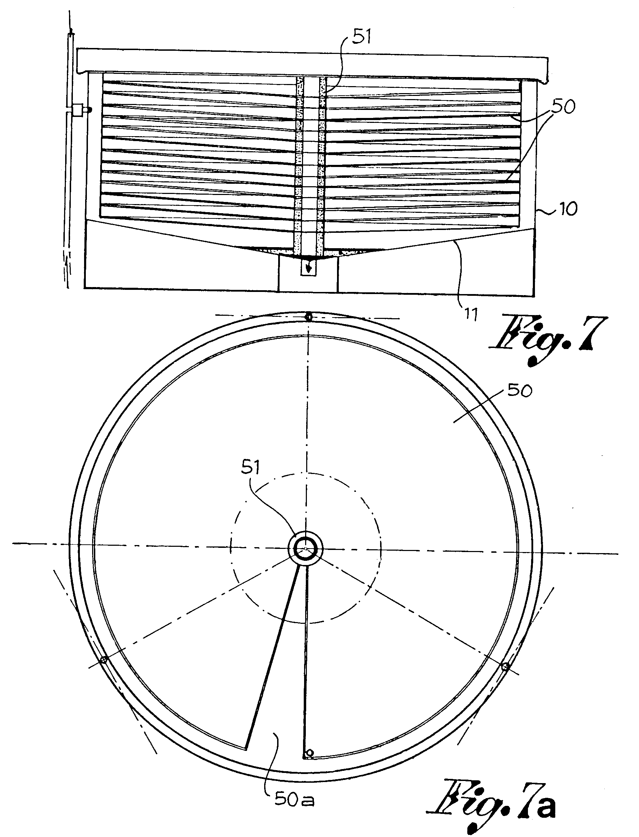

The plant here described can be used in the same way for the breeding of crustaceans and molluscs. The only difference is that the container (10) will have a series of grids laying over each other (50) (Figs. 7,7a) and forming as many layers of pisciculture.

Said grids increase the productive capacity of each single tank and can be added or taken away as required.

The edges of each grid are separate from each other so as to let the treated water pass whilst the bottom of the grids are of such a size so as to guarantee support to the crustaceans and molluscs and at the same time help the depositing of defecations on the bottom of the tank.

These grids can be locked together, unlocked and rotated around a pierced support column (51) one at the time so as to improve the control of production through a suitable segment-shaped slit (50a). Infact the operation can be quickly finished by rotating the various grids 360° previous to lifting the grids from the tank through a hook.

## Claims

1) A method for pisciculture in silos with the use of at least one verticle container having a funnel-shaped bottom and water supply and drainage tubes, characterized in that the water is drained from the bottom of the container for the continuous removal of defecations and impurities, the drained water is filtered for its purification and at least part of the filtered water is re-cycled into the same container through a closed hydraulic circuit.

2) A method for pisciculture in accordance to claim 1, characterized in that the re-cycled water is treated by purifying and/or biological filters and then circulated in an ozonizer for the sterilization and higher concentration of oxygen in the water.

3) A method for pisciculture in accordance to claims 1 and 2, characterized in that the water in the container has at least one air flow for its aeration or oxygenation.

4) A method for pisciculture in accordance to claim 3, characterized in that the air is fed into the container with the re-cycled water, the air being mixed with the re-cylced water and taken from the atmosphere or from a compressor.

5) A method for pisciculture in accordance to claims 3 or 4, characterized in that the air is thermically treated for the air-conditioning of the water in the container.

6) A method for pisciculture in accordance to the previous claims, characterized in that the container is pressurized.

7) A method for pisciculture in accordance to the previous claims, characterized in that medicines and/or flocculated products are mixed with the re-cycled water.

8) A pisciculture plant in accordance with the method of the preceding claims and having at least one verticle container (10) with a funnel-shaped bottom (11) and water supply and drainage pipes (12), characterized in that said container (10) and said pipes (12) form a closed hydraulic circuit with a forced circulation of the water.

9) A plant in accordance to claim 8, characterized in that the container (10) has a bottom drainage (13) which connects to at least one circulation pump (16), filters and to aeration and/or oxygenation and/or degassing equipment and then to the container for the return of the treated and purified water.

10) A plant in accordance to claim 9, characterized in that the bottom drainage has a filter column (14) above it made from two concentric pierced cylinders one being internal and fixed and the other being external and movable with a base flange.

11) A plant in accordance with claims 9 and 10, characterized in that the purified water returns into the container in a tangential direction straight into the body of water.

**12)** A plant in accordance to claim 11, characterized in that the water is sent into the container through nozzles placed around the container under the surface of the water, said nozzles being fed through articulated tubes.

**13)** A plant in accordance to claims 8 to 12, characterized in that there are means for sending atmospheric or pressurized air into the body of water in the container for its oxygenation.

**14)** A plant in accordance to claims 13, characterized in that said means for the air are joined to the nozzles for returning the purified water into the container mixed with the air.

**15)** A plant in accordance to claim 14, characterized in that there are means for a thermal treatment of the air before it is sent into the container.

**16)** A plant in accordance to claims 8 to 15, characterized in that the container (10) has a periferal canal at the top for collecting overflowing water and drains which connect to the conduit coming from the bottom of the container.

**17)** A plant in accordance to claim 16, characterized in that the container has a lid for controlling the internal pressure, said lid having air inlet and outlet valves, said valves being connectable to a compressed air source.

**18)** A plant in accordance to claim 17, characterized in that the container incorporates shining and/or transparent elements so that the inside of the container can be seen from the outside.

**19)** A plant in accordance to claims 8 to 18, characterized in that the container contains a number of over laying grids for the breeding of crustaceans or molluscs, said grids being fitted to a central support and positioned above each other and being individually movable around the support, each grid having a radial slit for the verticle visualization of the grids below.

Fig.1

Fig.2

EP 0 481 932 A1

*Fig.3*

*Fig.3a*

*Fig.4*

31

31

14a

35

*Fig.5*

*Fig.6*

14

35

31

14a

*Fig.5a*

14

*Fig.6a*

Fig.7

Fig.7a

**European Patent Office**

## EUROPEAN SEARCH REPORT

Application Number

EP 91 83 0432

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-1 596 950 (PIRELLI FURLANIS APLICAZIONI IDRAULICHE AGRICOLE GOMMA SPA) | 1,3,4,7, 8,9,13 | A01K61/00 A01K63/04 |
| A | * the whole document * | 2,11 | |
| | --- | | |
| X | US-A-3 116 712 (OGDEN) | 8 | |
| A | * the whole document * | 1-4,9, 10-13,16 | |
| | --- | | |
| A | US-A-2 302 336 (MACDONALD) | 1-3,6,8, 9,12,13, 17,19 | |
| | * the whole document * | | |
| | --- | | |
| A | DE-A-3 428 701 (KLAES) | 2 | |
| | * abstract * | | |
| | --- | | |
| A | WO-A-8 803 363 (FJELLANGER) | 3,4, 12-14 | |
| | * claims 1-3 * | | |
| | --- | | |
| A | WORLD PATENTS INDEX LATEST Week 8219, 1 April 1982 Derwent Publications Ltd., London, GB; AN 82-38045E & JP-A-57 054 542 (HATAYAMA) * abstract * | 5,15 | TECHNICAL FIELDS SEARCHED (Int. Cl.5 )  A01K |
| | --- | | |
| A | DE-A-2 227 206 (FRüCHTNICHT) | | |
| | --- | | |
| A | US-A-3 192 899 (LUCEY) | | |
| | --- | | |
| A | US-A-3 716 025 (LAWSON) | | |
| | ----- | | |

The present search report has been drawn up for all claims

| Place of search | Date of completion of the search | Examiner |
|---|---|---|
| THE HAGUE | 13 JANUARY 1992 | VON ARX V.U. |